**Europäisches Patentamt**

**European Patent Office**

**Office européen des brevets**

(19)

(11) Veröffentlichungsnummer : **0 176 497**
**B1**

(12) **EUROPÄISCHE PATENTSCHRIFT**

(45) Veröffentlichungstag der Patentschrift :
**13.04.88**

(21) Anmeldenummer : **85890222.4**

(22) Anmeldetag : **12.09.85**

(51) Int. Cl.⁴ : **C 03 B   3/00, C 03 B   5/26,
C 03 B   5/16, F 27 B   3/18,
F 27 B   3/19, F 27 D   3/00,
F 27 D   3/15, C 03 C   13/00**

(54) **Elektroschmelzofen.**

(30) Priorität : **18.09.84 AT 2964/84**

(43) Veröffentlichungstag der Anmeldung :
**02.04.86 Patentblatt 86/14**

(45) Bekanntmachung des Hinweises auf die Patenterteilung : **13.04.88 Patentblatt 88/15**

(84) Benannte Vertragsstaaten :
**BE CH DE FR GB IT LI LU NL SE**

(56) Entgegenhaltungen :
**EP-A-  0 035 850
DE-A-  1 948 291
DE-A-  2 355 168
DE-A-  3 019 812
DE-C-    896 028
FR-A-    680 669
US-A-  4 029 887
US-A-  4 385 918**

(73) Patentinhaber : **VOEST-ALPINE Aktiengesellschaft
Muldenstrasse 5
A-4020 Linz (AT)**

(72) Erfinder : **Die Erfinder haben auf ihre Nennung
verzichtet**

(74) Vertreter : **Wolfram, Gustav, Dipl.-Ing.
Schwindgasse 7 P.O. Box 205
A-1041 Wien (AT)**

EP 0 176 497 B1

## Beschreibung

Die Erfindung betrifft einen Elektroschmelzofen zum kontinuierlichen Erschmelzen von verspinnbaren mineralischen, feinteiligen oder körnigen Stoffen, mit einem feuerfest ausgekleideten Ofengefäß, einer Mehrzahl von auf einem Teilkreis angeordneten Elektroden, die von der Oberseite her in das Ofengefäß ragen, Dosierrohren zur Zufuhr der einzuschmelzenden Stoffe von oben und mindestens einer eine Seitenwand des Ofengefäßes durchsetzenden Absticheinrichtung.

Elektroschmelzöfen dieser Art sind aus der EP-A1-0 035 850 und der DE-A-1 948 291 bekannt. Die in das Ofeninnere ragenden Dosierrohre werden bei diesen bekannten Öfen diskontinuierlich beschickt, so daß eine gleichmäßige Füllung der Dosierrohre, d. h. eine Füllung der Dosierrohre mit einer stets gleichen Menge an Beschickungsgut, nicht gesichert ist. Hierdurch kann sich eine ungleichmäßige Chargierung und somit eine im Ofeninneren variierende Menge an einzuschmelzendem Stoff ergeben. Daraus resultiert der Nachteil, daß auf die im Ofen vorhandene Schmelze nicht stets der gleiche Druck wirkt, so daß ein gleichmäßiger Abstich, d. h. der Abstich einer pro Zeiteinheit konstanten Schmelzenmenge, nicht möglich ist. Dies ist insbesondere dann von Nachteil, wenn die Schmelze versponnen wird, da eine Spinneinrichtung kontinuierlich mit einer stets gleichbleibenden Schmelzenmenge pro Zeiteinheit versorgt werden muß.

Ein Elektroschmelzofen zum Erschmelzen schmelzbarer Oxidverbindungen, wie Schlacke, ist weiters aus der DE-A1-3 019 812 bekannt. Der bekannte Elektroschmelzofen ist bis nahe zu seinem oberen Rand mit Schmelze gefüllt, die vom zu erschmelzenden, noch körnigen Material bedeckt ist. Über ein Förderband wird das zu verschmelzende Material zum Elektroschmelzofen gefördert und über Schütten chargiert. Die bis zum oberen Rand des Elektroschmelzofens reichende Schmelze stellt für das Ofengefäß eine hohe thermische Belastung dar, so daß der bekannte Ofen mit einer Außenkühlung versehen sein muß. Weiters ist es bei dem bekannten Ofen nicht möglich, die Höhe der auf der Schmelze schwimmenden von dem zu erschmelzenden Material gebildete Schicht konstant zu halten, zumal sich die Schmelze niveaumäßig bis weit über die Absticheinrichtung erstreckt, wodurch die Höhe des Badspiegels des Schmelzenbades variiert. Damit variiert auch der auf die Absticheinrichtung wirkende Druck und die aus der Absticheinrichtung ausströmende Schmelzenmenge pro Zeiteinheit.

Die pro Zeiteinheit stark ungleichmäßige Schmelzleistung bekannter Elektroschmelzöfen war auch bisher der Grund, warum man sich mit Schmelzleistungen bis zu 200 kg/h zufrieden geben mußte. Aufgrund der gesteigerten Nachfrage für Isoliermaterialien und aus Rentabilitätsgründen ist man bestrebt, zu größeren Erzeugungseinheiten, beispielsweise zu Erzeugungseinheiten, die zwischen 1 und 4 t verspinnbares Material pro Stunde erzeugen, überzugehen. Große Erzeugungseinheiten konnte man bisher nur mit einem Kupolofen erreichen, der jedoch den Nachteil der Abhängigkeit vom Brennstoff aufweist. Weitere Nachteile sind darin zu sehen, daß die aus einem Kupolofen austretenden Emissionen aufwendige Abgasaufbereitungsanlagen erfordern und daß die Wollfasern einen Aschengehalt aufweisen.

Die Erfindung bezweckt die Vermeidung dieser Nachteile und Schwierigkeiten und stellt sich die Aufgabe, einen Elektroschmelzofen der eingangs beschriebenen Art zu schaffen, mit dem bei Erzeugung hochwertiger Wolle aus mineralischen Stoffen hohe Schmelzleistungen, insbesondere Schmelzleistungen zwischen 1 und 4 t/h möglich sind und bei dem ein gleichmäßiger Schmelzenausfluß pro Zeiteinheit erreicht wird.

Diese Aufgabe wird erfindungsgemäß gemäß einer ersten Ausführungsform dadurch gelöst, daß die Dosierrohre nahe des von den Elektroden gebildeten Teilkreises zwischen jeweils zwei Elektroden vorgesehen sind und von Vibrationsrinnen beaufschlagt sind, deren Förderöffnungen jeweils oberhalb eines Dosierrohres enden und deren Fördermengen jeweils zwecks während des Betriebes stets vollständiger Füllung der Dosierrohre größer sind als der Massenstrom im zugehörigen Dosierrohr, wobei bei Entstehung eines nach oben gerichteten Schüttkegels an der oberen Öffnung des Dosierrohres die weitere Förderung von zu erschmelzenden Stoffen mittels der Vibrationsrinne selbsttätig unterbrochen ist.

Eine zweite Ausführungsform ist dadurch gekennzeichnet, daß die Dosierrohre nahe des von den Elektroden gebildeten Teilkreises zwischen jeweils zwei Elektroden vorgesehen sind und von Förderbändern oder Förderschnecken beaufschlagt sind, deren Fördermengen jeweils zwecks während des Betriebes stets vollständiger Füllung der Dosierrohre größer sind als der Massenstrom im zugehörigen Dosierrohr, wobei an der oberen Öffnung jedes Dosierrohres ein Fühler, z. B. ein Lichtschranken, vorgesehen ist, der bei vollständiger Füllung des Dosierrohres und Entstehen eines Schüttkegels das zugehörige Förderband bzw. die Förderschnecke stillsetzt.

Durch die erfindungsgemäßen Maßnahmen wird eine hohe Gleichmäßigkeit der Chargierung und damit ein äußerst gleichmäßiger Schmelzfluß bei hoher Schmelzleistung erzielt. Ungleichmäßigkeiten in der Beschickung führen nämlich zu einer ungleichmäßigen Ausflußmenge, da das auf dem Schmelzenbad liegende feste Einsatzgut in Abhängigkeit seines Gewichtes einen Druck auf das Schmelzenbad ausübt, was sich unmittelbar auf die Ausflußmenge pro Zeiteinheit auswirkt. Es hat sich herausgestellt, daß schon sehr geringe Druckveränderungen genügen, um die Ausflußmenge pro Zeiteinheit wesentlich zu verändern.

Vorteilhaft weisen die Dosierrohre an ihren jeweils den Elektroden zugewandten seiten· eine sich von der Mündung aus vertikal nach oben erstreckende Wand-Ausnehmung auf, wodurch im Bereich der Elektroden mehr Einsatzgut vorhanden ist. Damit wird einerseits der Schutz der Elektroden erhöht und andererseits der Tatsache Rechnung getragen, daß um die Elektroden wesentlich mehr Einsatzgut aufgeschmolzen wird als an den übrigen Stellen des Ofengefäßes. Dies führt zu einer gleichmäßigen Belastung der Schmelze durch das noch unaufgeschmolzene Gut, wodurch der gleichmäßige Schmelzenausfluß begünstigt wird.

Zur weiteren Begünstigung eines gleichmäßigen Schmelzenausflusses besteht zweckmäßig die Absticheinrichtung aus einem in die Seitenwand des Elektroschmelzofens einsetzbaren, wassergekühlten Abstichrohr und weist einen von der Ofeninnenseite in Richtung nach außen aufsteigenden Rohrteil und einen zur Ofenaußenseite abfallenden Rohrteil zur Bildung einer Überlaufkante auf, wobei die Überlaufkante im Vertikalabstand unterhalb der Oberseite der an der Ofeninnenseite liegenden Mündung des Rohrteiles angeordnet ist. Dadurch wird die Schmelze nicht unmittelbar von der Oberfläche, sondern von einem heißeren Bereich unterhalb der Oberfläche abgezogen und eine gleichmäßig hohe Temperatur und Reinheit der abgezogenen Schmelze gesichert.

Zweckmäßig ist oberhalb des Abstichrohres ein durch den Hohlraum der Absticheinrichtung ragendes Entlüftungsrohr zum Abziehen etwa entstehender Gase vorgesehen. Durch diese Maßnahme wird der vom körnigen Einsatzgut auf die Schmelze ausgeübte Druck und damit der Ausfluß von Schmelze weiter vergleichmäßigt.

Zweckmäßig ist das Abstichrohr von der Ofeninnenseite bis zur Überlaufkante im Grundriß konvergierend und von der Überlaufkante zur Ofenaußenseite divergierend ausgebildet.

Um die Absticheinrichtung auswechseln zu können, ohne den Ofenbetrieb unterbrechen zu müssen, ist vorteilhaft auf einem unterhalb der Absticheinrichtung liegenden Niveau des Ofengefäßes ein für Störfälle verwendbarer verschließbarer Notabstich vorgesehen, wodurch es möglich ist, nach Öffnen des Notabstiches den Badspiegel abzusenken und danach das Wechseln der Absticheinrichtung vorzunehmen.

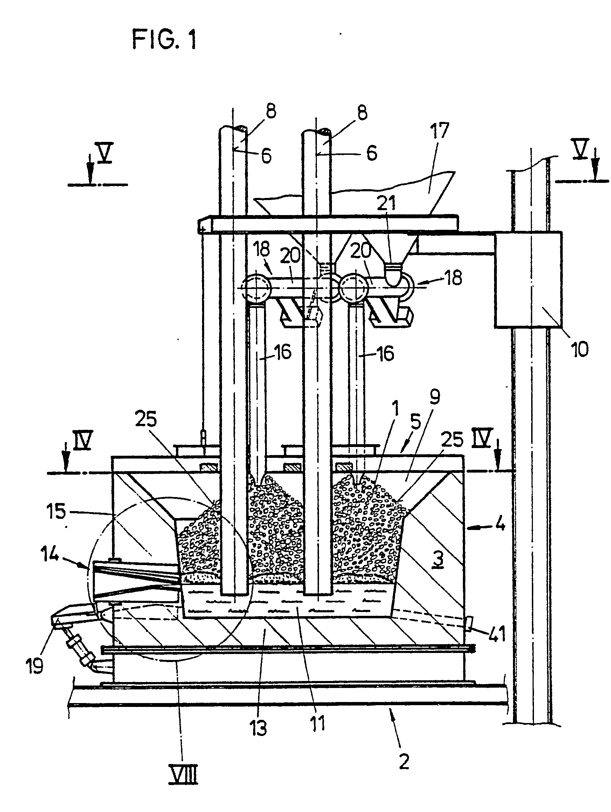

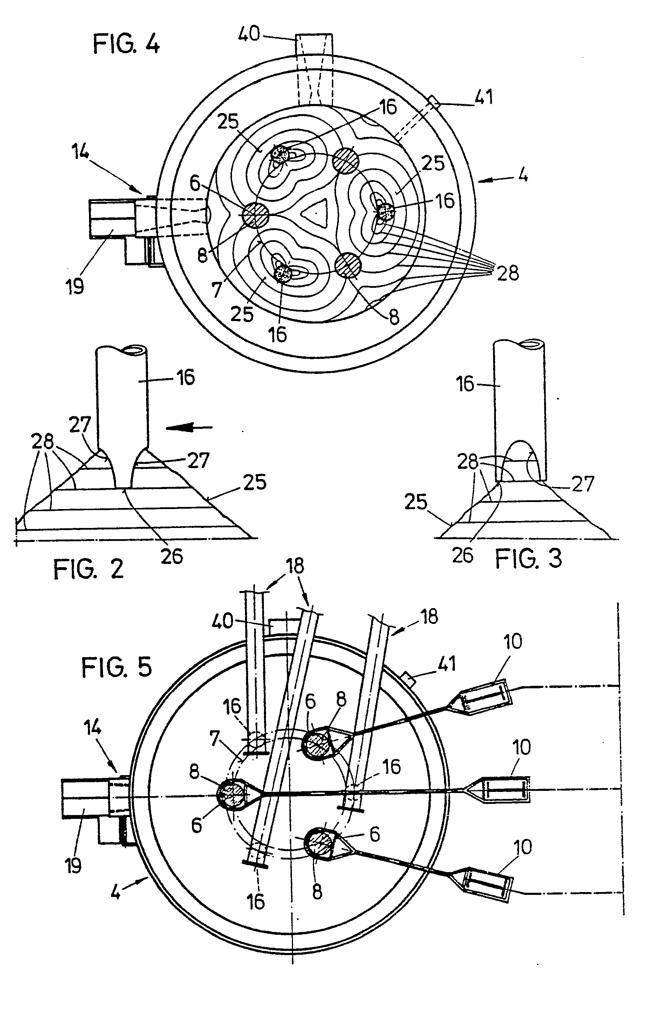

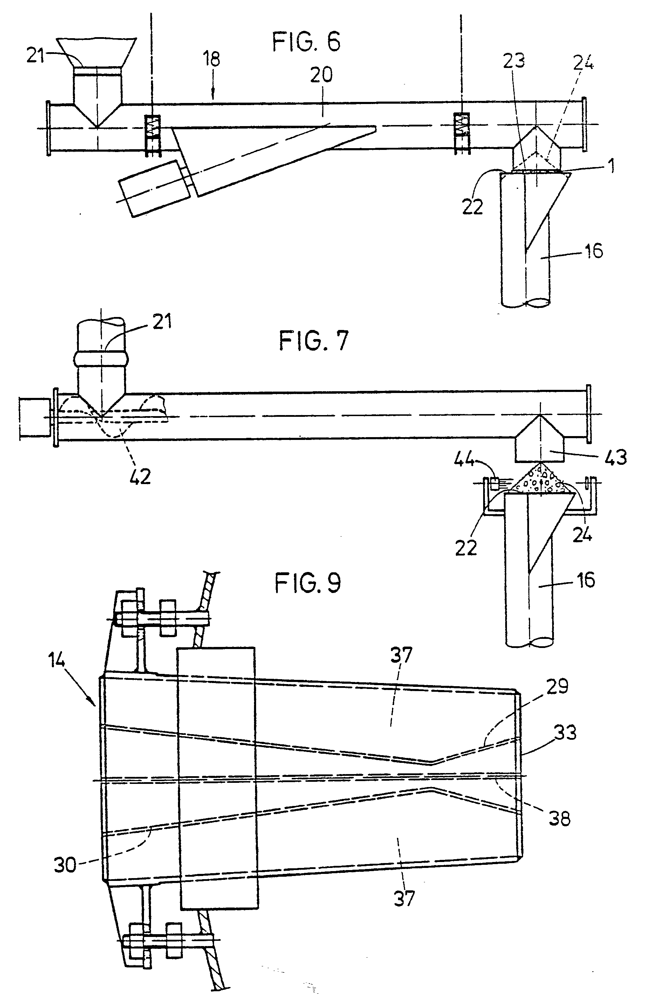

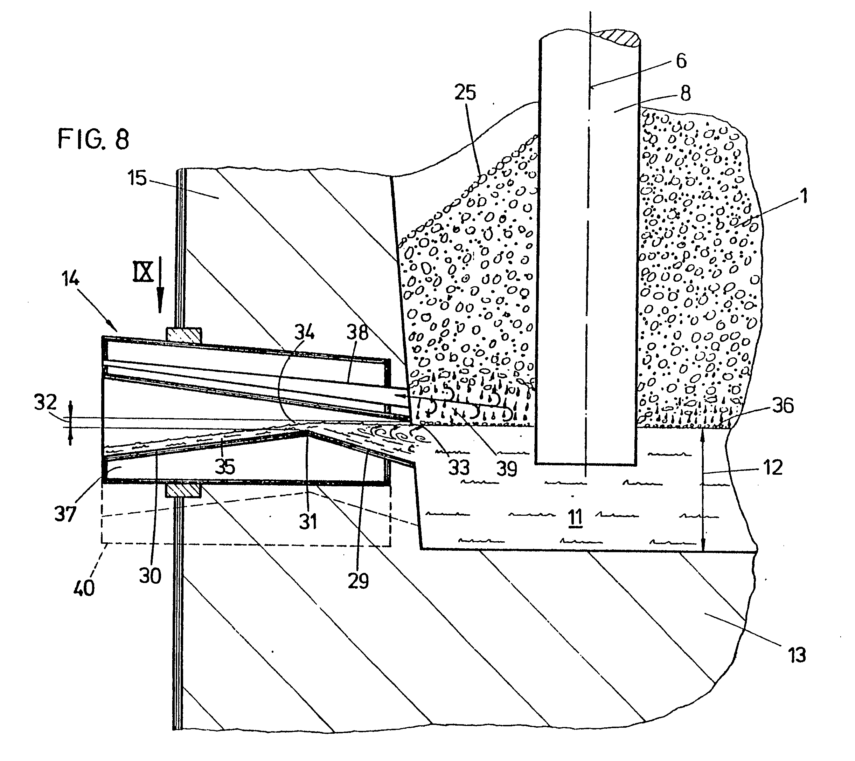

Die Erfindung ist nachfolgend anhand der Zeichnungen näher erläutert, wobei Fig. 1 einen Schnitt durch einen Elektroschmelzofen in schematischer Darstellung veranschaulicht. Die Fig. 2 und 3 zeigen Details der Fig. 1 im vergrößerten Maßstab, wobei Fig. 3 eine Ansicht in Richtung des Pfeiles III der Fig. 2 ist. Fig. 4 zeigt einen gemäß der Linie IV-IV der Fig. 1 geführten Schnitt, ebenfalls im vergrößerten Maßstab. Fig. 5 stellt einen gemäß der Linie V-V der Fig. 1 geführten Schnitt dar, die Fig. 6 und 7 zeigen jeweils eine Ausführungsform einer Transporteinrichtung. Fig. 8 veranschaulicht ein Detail VIII der Fig. 1 im vergrößerten Maßstab. Fig. 9 ist eine Ansicht der Absticheinrichtung in Richtung des Pfeiles IX der Fig. 8.

Ein zum Erschmelzen von verspinnbaren, mineralischen, feinteiligen oder körnigen Stoffen 1 dienender Elektroschmelzofen 2 weist ein mit einer feuerfesten Auskleidung 3 versehenes Ofengefäß 4 auf und ist von einem Deckel 5 bedeckt. Durch den Deckel 5 ragen drei mit ihren Achsen 6 im Grundriß auf einem Teilkreis 7 angeordnete Elektroden 8 in den Ofeninnenraum 9. Jede der Elektroden 8 ist mittels eines eigenen Hub- und Senkwerkes 10 in vertikaler Richtung zwecks Einstellung einer bestimmten Eintauchtiefe in das Schmelzenbad 11 bewegbar. In geringer Höhe 12 über dem Boden 13 des Ofengefäßes 4 ist eine Absticheinrichtung 14 vorgesehen, die eine Seitenwand 15 des Ofengefäßes 4 durchsetzt.

Durch den Deckel 5 ragen Dosierrohre 16 in den Ofeninnenraum 9, die — im Grundriß — nahe des von den Elektroden 8 gebildeten Teilkreises 7 zwischen jeweils zwei Elektroden 8 parallel zu den Elektroden vorgesehen sind. Die zu chargierenden feinteiligen oder körnigen Stoffe 1 gelangen von einem oberhalb des Ofens angeordneten Vorratsbunker 17 über jeweils eine Transporteinrichtung 18 zu jeweils einem Dosierrohr 16. Die durch die Absticheinrichtung 14 austretende Schmelze fließt über eine Abstichrinne 19 zu einem nicht näher dargestellten Spinner.

Zur gleichmäßigen Einbringung der zu chargierenden feinteiligen oder körnigen Stoffe 1 sind die Transporteinrichtungen 18 gemäß einer ersten Ausführungsform als Vibrationsrinnen 20 ausgebildet, die vom Bunkerauslaß 21 bis zur oberen Öffnung 22 der vertikal angeordneten Dosierrohre 16 reichen. Die Vibrationsrinnen 20 sind ständig in Betrieb und fördern die feinteiligen oder körnigen Stoffe 1 so lange, bis die Förderöffnungen 23 der Vibrationsrinnen 20 jeweils von sich im Dosierrohr an dessen oberer Öffnung 22 in Form eines Schüttkegels 24 häufendem Chargiergut verschlossen sind, wie dies in Fig. 6 dargestellt ist. In diesem Fall hört die Förderung der Vibrationsrinnen automatisch auf, obwohl die Rinnen weiterhin in Betrieb bleiben. Sobald das Chargiergut 1 durch die Dosierrohre 16 in den Ofeninnenraum 9 weiterrutscht und die Förderöffnungen 23 der Vibrationsrinnen 20 wieder frei werden, fördern die Vibrationsrinnen 20 automatisch wiederum Chargiergut 1 zu den Dosierrohren 16, so daß diese stets ganz gefüllt sind.

Die durch die Dosierrohre 16 in den Ofeninnenraum eindringenden feinteiligen oder körnigen Stoffe bilden im Ofeninnenraum Schüttkegel 25, u. zw. bis in die Höhe der Mündungen 26 der Dosierrohre 16. Die Dosierrohre 16 weisen an ihren unteren Enden jeweils sich von den Mündungen 26 vertikal nach oben erstreckende Wandausnehmungen 27 auf, die in Richtung zu den benachbarten Elektroden 8 gerichtet sind. Diese Wandausnehmungen 27 bewirken, daß zu den Bereichen der Elektroden 8 mehr zu erschmelzende Stoffe 1 gelangen. In Fig. 4 ist die durch die Wandausnehmungen 27 eigenartige Gestaltung der Schüttkegel durch Höhenschichtlinien 28 veranschaulicht. Dadurch, daß zu den Elektroden 8 mehr zu erschmelzende Stoffe 1 gelangen als bei normaler Gestaltung der Mündungen 26 der Dosierrohre, sind die Elektroden 8 besser geschützt und wird der Tatsache Rechnung getragen, daß unmittelbar um die Elektroden 8 die größte Menge an Stoffen 1 aufgeschmolzen wird.

Zur Begünstigung des gleichmäßigen Schmelzenausflusses pro Zeiteinheit ist die Abstichrichtung 14 von einem in die Seitenwand 15 des Elektroschmelzofens einsetzbaren wassergekühlten Abstichrohr gebildet, das einen von der Ofeninnenseite in Richtung nach außen aufsteigenden Rohrteil 29 und an der Ofenaußenseite einen in die gleiche Richtung zur Ofenaußenseite hin absteigenden Rohrteil 30 aufweist.

Die beiden Rohrteile 29 und 30 bilden dort, wo sie ineinander münden, eine Überlaufkante 31, die im Vertikalabstand 32 unterhalb der Oberseite der an der Ofeninnenseite liegenden Mündung 33 des Rohrteiles 29 liegt, so daß die Abstichrichtung 14 einen in horizontaler Richtung freien Durchlaß 34 aufweist. Durch diese Gestaltung der Abstichrichtung wird bewirkt, daß die ausfließende Schmelze 35 nicht direkt vom Badspiegel 36 des Schmelzenbades 11, sondern von einem darunter liegenden Bereich des Schmelzenbades 11 mit höherer Temperatur entnommen wird, wobei jedoch eine Heberwirkung vermieden wird. Die Schmelze 35 fließt daher gleichmäßig aus, sobald der Badspiegel 36 die Überlaufkante erreicht.

Im Grundriß ist der an der Ofeninnenseite in Richtung nach außen aufsteigende Rohrteil 29 zur Ofeninnenseite hin divergierend gestaltet, um ein Reinigen bei eventuellem Zufrieren dieses Rohrteiles 29 zu erleichtern.

Oberhalb des Abstichrohres 29, 30 wird der vom Kühlmittel durchströmte Hohlraum 37 der Abstichrichtung von einem von der Ofenaußenseite bis zur Ofeninnenseite ragenden und nach außen ansteigenden Entlüftungsrohr 38 durchsetzt, das zwecks einfach durchzuführender Reinigung ebenfalls in Richtung zum Ofeninnenraum 9 hin divergierend gestaltet ist. Dieses Entlüftungsrohr 38 mündet, wie aus Fig. 8 ersichtlich, in die Schmelzzone 39, also in den Bereich, in dem es zu Zusammenbackungen der zu erschmelzenden Stoffe kommt, und dient dazu, in diesem Bereich entstehende Gase, die sich ungünstig auf den gleichmäßigen Schmelzenausfluß auswirken könnten, aus dem Ofeninnenraum 9 nach außen zu leiten.

Zur Gasbildung kommt es aufgrund der Reaktion des in den zu erschmelzenden Stoffen meist enthaltenen Eisenoxids mit Kohlenstoff, die zur Bildung von Kohlenmonoxid führt. Die örtlich entstehenden Gasmengen sind zwar gering, reichen jedoch aus, daß sie durch Einwirken auf den Badspiegel 36 in unmittelbarer Nähe der Absticheinrichtung 14 den gleichmäßigen Ausfluß der Schmelze 35 beeinträchtigen.

Auf einem Niveau unterhalb der Abstichrichtung 14 ist ein verschließbarer Notabstich 40 vorgesehen, der bei Störfällen, z. B. zum Austausch der Abstichrichtung 14, verwendet

wird. Mit seiner Hilfe kann der Badspiegel 36 soweit abgesenkt werden, daß die Abstichrichtung 14 ausgetauscht werden kann, ohne den Ofenbetrieb unterbrechen zu müssen. Der Notabstich ist gleich der Abstichrichtung gestaltet, also ebenfalls wassergekühlt, und um etwa ein Viertel des Umfanges des Elektroschmelzofens 2 zur Abstichrichtung 14 versetzt angeordnet. Er ist mittels eines Stahlstopfens verschließbar, wodurch das Schließen und Öffnen des Notabstiches einfach durchführbar ist.

Zur Erzielung einer hohen Schmelzleistung ist der Elektroschmelzofen als 3-Phasen-Drehstromofen ausgebildet. Die Einbringung der Energie erfolgt durch Ohm'sche Wärme, wobei die eingebrachten Stoffe 1 den Ohm'schen Widerstand darstellen. Der Elektroschmelzofen eignet sich zum Erschmelzen von Hochofenschlacke, die gegebenenfalls mit Sand, Glas bzw. Flugasche vermischt sein kann, sowie zum Erschmelzen von Mineralien, wie Diabas, Granit, Porphyrit. Die Körnung der eingesetzten Stoffe liegt zweckmäßig zwischen 2 und 30 mm. Die Einstellung der Elektrodeneintauchtiefe erfolgt auf konstante Leistung, wobei die Elektroden 8 einzeln angesteuert werden.

Der Elektroschmelzofen weist weiters einen Bodenabstich 41 herkömmlicher Art auf, der dazu dient, den Elektroschmelzofen zu entleeren und eventuell erschmolzenes Roheisen, welches sich am Boden 13 sammelt, abzustechen.

In Fig. 7 ist eine weitere Ausführungsform einer vom Vorratsbunker 17 zu den Dosierrohren 16 führenden Transporteinrichtung gezeigt. Es handelt sich bei der Transporteinrichtung um eine Förderschnecke 42, deren Austragsstelle 43 oberhalb des Dosierrohres 16 liegt. Zur Sicherung der gleichmäßigen Chargierung ist an der oberen Öffnung 22 des Dosierrohres 16 ein Fühler 44 vorgesehen, z. B. ein Lichtschranken, der bei vollständiger Füllung des Dosierrohres und Entstehen eines Schüttkegels 24 die Transporteinrichtung stillsetzt.

**Patentansprüche**

1. Elektroschmelzofen (2) zum kontinuierlichen Erschmelzen von verspinnbaren mineralischen, feinteiligen oder körnigen Stoffen (1), mit einem feuerfest ausgekleideten Ofengefäß (4), einer Mehrzahl von auf einem Teilkreis (7) angeordneten Elektroden (8), die von der Oberseite her in das Ofengefäß (4) ragen, Dosierrohren (16) zur Zufuhr der einzuschmelzenden Stoffe (1) von oben und mindestens einer eine Seitenwand (15) des Ofengefäßes (4) durchsetzenden Abstichrichtung (14), dadurch gekennzeichnet, daß die Dosierrohre (16) nahe des von den Elektroden gebildeten Teilkreises (7) zwischen jeweils zwei Elektroden (8) vorgesehen sind und von Vibrationsrinnen (20) beaufschlagt sind, deren Förderöffnungen (23) jeweils oberhalb eines Dosierrohres (16) enden und deren Fördermengen jeweils zwecks während des Betriebes stets vollständiger Füllung der Dosierrohre (16) größer sind als der Massenstrom im zugehörigen Dosierrohr (16), wobei bei Entstehung eines nach oben gerichteten Schüttkegels (24) an der oberen Öffnung (22) des Dosierrohres (16) die weitere Förderung von zu erschmelzenden Stoffen (1) mittels der Vibrationsrinne (20) selbsttätig unterbrochen ist.

2. Elektroschmelzofen (2) zum kontinuierlichen Erschmelzen von verspinnbaren mineralischen, feinteiligen oder körnigen Stoffen (1), mit einem feuerfest ausgekleideten Ofengefäß (4), einer Mehrzahl von auf einem Teilkreis (7) angeordneten Elektroden (8), die von der Oberseite her in das Ofengefäß (4) ragen, Dosierrohren (16) zur Zufuhr der einzuschmelzenden Stoffe (1) von oben und mindestens einer eine Seitenwand (15) des Ofengefäßes (4) durchsetzenden Absticheinrichtung (14), dadurch gekennzeichnet, daß die Dosierrohre (16) nahe des von den Elektroden gebildeten Teilkreises (7) zwischen jeweils zwei Elektroden (8) vorgesehen sind und von Förderbändern oder Förderschnecken (42) beaufschlagt sind, deren Fördermengen jeweils zwecks während des Betriebes stets vollständiger Füllung der Dosierrohre (16) größer sind als der Massenstrom im zugehörigen Dosierrohr (16), wobei an der oberen Öffnung (22) jedes Dosierrohres (16) ein Fühler (44), z. B. ein Lichtschranken, vorgesehen ist, der bei vollständiger Füllung des Dosierrohres (16) und Entstehen eines Schüttkegels (24) das zugehörige Förderband bzw. die Förderschnecke stillsetzt.

3. Elektroschmelzofen nach Anspruch 1 oder 2, dadurch gekennzeichnet, daß die Dosierrohre (16) an ihren jeweils den Elektroden zugewandten Seiten eine sich von der Mündung (26) aus vertikal nach oben erstreckende Wand-Ausnehmung (27) aufweisen.

4. Elektroschmelzofen nach den Ansprüchen 1 bis 3, dadurch gekennzeichnet, daß die Absticheinrichtung (14) aus einem in die Seitenwand (15) des Elektroschmelzofens (2) einsetzbaren, wassergekühlten Abstichrohr (29, 30) besteht und einen von der Ofeninnenseite in Richtung nach außen aufsteigenden Rohrteil (29) und einen zur Ofenaußenseite abfallenden Rohrteil (30) zur Bildung einer Überlaufkante (31) aufweist, wobei die Überlaufkante (31) im Vertikalabstand (32) unterhalb der Oberseite der an der Ofeninnenseite liegenden Mündung (33) des Rohrteiles (29) angeordnet ist.

5. Elektroschmelzofen nach den Ansprüchen 1 bis 4, dadurch gekennzeichnet, daß oberhalb des Abstichrohres (29, 30) ein durch den Hohlraum (37) der Absticheinrichtung (14) ragendes Entlüftungsrohr (38) zum Abziehen etwa entstehender Gase vorgesehen ist.

6. Elektroschmelzofen nach den Ansprüchen 1 bis 5, dadurch gekennzeichnet, daß das Abstichrohr (29, 30) von der Ofeninnenseite bis zur Überlaufkante (31) im Grundriß konvergierend und von der Überlaufkante (31) zur Ofenaußenseite divergierend ausgebildet ist.

7. Elektroschmelzofen nach den Ansprüchen 1 bis 6, dadurch gekennzeichnet, daß auf einem unterhalb der Absticheinrichtung (14) liegenden Niveau des Ofengefäßes (4) ein für Störfälle verwendbarer verschließbarer Notabstich (40) vorgesehen ist.

## Claims

1. Electric melting furnace (2) for continuously melting mineral, fine-particle or granular materials (1) capable of being spun, with a refractorily lined furnace vessel (4), a plurality of electrodes (8) arranged on a partial circle (7), which project from above into the furnace vessel (4), dosing pipes (16) for supplying the materials (1) to be melted from above, and at least one tapping device (14) penetrating a side wall (15) of the furnace vessel (4), characterised in that the dosing pipes (16) are arranged close to the partial circle (7) formed by the electrodes between two of the electrodes (8) each and are admitted by vibrating channels (20), whose conveying openings (23) each end above a dosing pipe (16) and whose conveying quantities, for constantly maintaining a complete filling of the dosing pipes (16) during operation, are each larger than the mass stream in the pertaining dosing pipe (16), wherein, upon formation of an upwardly directed dumping cone (24) at the upper opening (22) of the dosing pipe (16), further conveying of materials (1) to be melted is automatically interrupted by the vibrating channel (20).

2. Electric melting furnace (2) for continuously melting mineral, fine-particle or granular materials (1) capable of being spun, with a refractorily lined furnace vessel (4), a plurality of electrodes (8) arranged on a partial circle (7), which project from above into the furnace vessel (4), dosing pipes (16) for supplying the materials (1) to be melted from above, and at least one tapping device (14) penetrating a side wall (15) of the furnace vessel (4), characterised in that the dosing pipes (16) are arranged close to the partial circle (7) formed by the electrodes between two of the electrodes (8) each and are admitted by conveying belts or worm conveyors (42) whose conveying quantities, for constantly maintaining a complete filling of the dosing pipes (16) during operation, are each larger than the mass stream in the pertaining dosing pipe (16), wherein, at the upper opening (22) of each dosing pipe (16), a sensor (44), e. g. a photoelectric barrier, is provided, which stops the pertaining conveyor belt or worm conveyor upon complete filling of the dosing pipe (16) and formation of a dumping cone (24).

3. Electric melting furnace according to claim 1 or 2, characterised in that the dosing pipes (16) at their sides facing the electrodes each have a wall recess (27) extending vertically upward from the mouth (26).

4. Electric melting furnace according to claims 1 to 3, characterised in that the tapping device (14) consists of a water-cooled tapping pipe (29, 30) insertable into the side wall (15) of the electric melting furnace (2) and has a pipe portion (29) rising from the furnace inner side in the direction towards outside, and a pipe portion (30) downwardly inclined towards the furnace outer side, for forming an overflow edge (31), the overflow edge (31) being located at a vertical distance (32) below the upper side of the mouth (33) of the pipe portion (29) lying at the furnace inner side.

5. Electric melting furnace according to claims 1 to 4, characterised in that above the tapping pipe (29, 30) an aerating pipe (38) extending through the cavity (37) of the tapping device (14) is provided for drawing off gases possibly forming.

6. Electric melting furnace according to claims 1 to 5, characterised in that the tapping pipe (29, 30) is designed so as to converge from the furnace inner side to the overflow edge (31) in its ground plan, and to diverge from the overflow edge (31) to the furnace outer side.

7. Electric melting furnace according to claims 1 to 6, characterised in that a closeable emergency tap (40) is provided at a level of the furnace vessel (4) below the tapping device (14) to be used in case of disturbances.

**Revendications**

1. Four de fusion électrique (2) pour la fusion continue de matières minérales (1) se laissant filer et se présentant à l'état finement divisé ou granuleux, comprenant une carcasse de four (4) avec un garnissage réfractaire, plusieurs électrodes (8) disposées sur un cercle primitif (7) et faisant saillie d'en haut à l'intérieur de la carcasse (4), des tubes de dosage (16) pour l'amenée d'en haut des matières (1) à fondre, ainsi qu'au moins un dispositif de coulée (14) qui traverse une paroi latérale (15) de la carcasse (4) du four, caractérisé en ce que les tubes de dosage (16) sont prévus près du cercle (7) formé par les électrodes, chacun entre deux électrodes (8), et sont alimentés par des goulottes vibrantes (20) qui se terminent chacune par une ouverture de sortie (23) située au-dessus d'un tube de dosage (16) et dont les débits sont supérieurs au débit massique dans le tube de dosage (16) correspondant, afin que les tubes de dosage (16) restent constamment remplis entièrement pendant le fonctionnement, la formation d'un cône de déversement (24) dirigé vers le haut provoquant l'interruption automatique de la poursuite de l'alimentation en matières (1) à fondre au moyen de la goulotte vibrante (20) au moment où ce cône atteint l'ouverture supérieure (22) du tube de dosage (16).

2. Four de fusion électrique (2) pour la fusion continue de matières minérales (1) se laissant filer et se présentant à l'état finement divisé ou granuleux, comprenant une carcasse de four (4) avec un garnissage réfractaire, plusieurs électrodes (8) disposées sur un cercle primitif (7) et faisant saillie d'en haut à l'intérieur de la carcasse (4), des tubes de dosage (16) pour l'amenée d'en haut des matières (1) à fondre, ainsi qu'au moins un dispositif de coulée (14) qui traverse une paroi latérale (15) de la carcasse (4) du four, caractérisé en ce que les tubes de dosage (16) sont prévus près du cercle (7) formé par les électrodes, chacun entre deux électrodes (8), et sont alimentés par des bandes ou des vis transporteuses (42) dont les débits sont supérieurs au débit massique dans le tube de dosage (16) correspondant, afin que les tubes de dosage (16) restent constamment remplis entièrement pendant le fonctionnement, un capteur (44), par exemple un barrage photoélectrique, étant prévu sur l'ouverture supérieure (22) de chaque tube de dosage (16) pour arrêter la bande ou la vis transporteuse correspondante lorsque le tube de dosage (16) est entièrement rempli et qu'il se forme un cône de déversement (24).

3. Four selon la revendication 1 ou 2, caractérisé en ce que les tubes de dosage (16) présentent, sur chacun de leurs côtés dirigés vers les électrodes, une échancrure (27) formée dans la paroi du tube à partir de l'embouchure (26) de celui-ci et s'étendant verticalement vers le haut.

4. Four selon les revendications 1 à 3, caractérisé en ce que le dispositif de coulée (14) est formé d'un tube de coulée (29, 30) refroidi à l'eau et qui est monté amovible dans la paroi latérale (15) du four (2), ce tube de coulée comprenant un tronçon de tube (29) qui monte de l'intérieur du four vers l'extérieur et un tronçon de tube (30) qui descend vers l'extérieur du four, en vue de la formation d'un bord-déversoir (31), la disposition étant telle que ce bord-déversoir (31) se trouve à une distance verticale (32) au-dessous du bord supérieur de l'entrée (33) du tronçon descendant (29) du tube, entrée qui est située à l'intérieur du four.

5. Four selon les revendications 1 à 4, caractérisé en ce qu'un tuyau d'échappement (38) pour l'évacuation de gaz éventuellement formés traverse l'espace vide (37) du dispositif de coulée (14) au-dessus du tube de coulée (29, 30).

6. Four selon les revendications 1 à 5, caractérisé en ce que le tube de coulée (29, 30) possède une forme convergente, vue en plan, à partir de l'intérieur du four jusqu'au bord-déversoir (31), et une forme divergente à partir de ce bord-déversoir (31) vers l'extérieur du four.

7. Four selon les revendications 1 à 6, caractérisé en ce qu'un dispositif de coulée de secours (40), lequel est normalement fermé et est utilisable en cas de perturbations, est prévu à un niveau de la carcasse (4) du four situé au-dessous du dispositif de coulée (14).

FIG. 1

FIG. 4

FIG. 2

FIG. 3

FIG. 5

FIG. 6

FIG. 7

FIG. 9

FIG. 8

0 176 497